# EUROPÄISCHE PATENTANMELDUNG

(11) **EP 4 556 710 A1**
(43) Veröffentlichungstag der Anmeldung: **21.05.2025**
(21) Anmeldenummer: 23210604.7
(22) Anmeldetag: 17.11.2023
(51) Int. Cl.: F03D 15/10, F03D 80/00, F16H 57/028

(54) **GETRIEBEGLOCKE ZUR BEFESTIGUNG EINES WINDGETRIEBES IN EINER WINDKRAFTANLAGE**

(71) Anmelder: Flender GmbH, 46395 Bocholt (DE)
(72) Erfinder: KLEIN, Andreas, 46395 Bocholt (DE); HESSLING, Pascal, 46395 Bocholt (DE); HAMBRECHT, Ralf, 46395 Bocholt (DE)
(74) Vertreter: Michalski Hüttermann & Partner Patentanwälte mbB

(57) **Zusammenfassung**

Es ist eine Getriebeglocke (26) zur Befestigung eines Windgetriebes (18) in einer Windkraftanlage (10) vorgesehen mit einem ersten Befestigungsbereich (30) zur Befestigung mit einem Getriebegehäuse des Windgetriebes (18) und einem zu dem ersten Befestigungsbereich (30) über einen Ringkörper (28) axial beabstandeten zweiten Befestigungsbereich (32) zur Befestigung mit einem Gondelgehäuse der Windkraftanlage (10) und/oder mit einem eine Windrotorwelle (16) eines Windrotors (12) der Windkraftanlage (12) lagernden Hauptwellenlager, wobei der Ringkörper (28) mindestens zwei zueinander unterschiedlich ausgestalte Aussparungen (34) zur Körperschalldämpfung aufweist. Durch die mit Hilfe der unterschiedlich ausgestalteten Aussparungen (34) erreichten Asymmetrie in der Getriebeglocke (26) selbst kann in einer Vielzahl von unterschiedlich ausgestalteten Windkraftanlagen (10) eine Reduzierung von Geräuschemissionen ermöglicht werden.

## Beschreibung

Die Erfindung betrifft eine Getriebeglocke, mit dessen Hilfe ein Windgetriebe in einer Windkraftanlage befestigt werden kann.

Aus WO 2018/007184 A1 ist eine Getriebeglocke zur Befestigung eines ein Planetengetriebe aufweisenden Getriebegehäuses mit einer Gondel einer Windkraftanlage bekannt, wobei die Getriebeglocke identische Aussparungen aufweist, deren Anzahl von der Anzahl der Planetenräder des Planetengetriebes abweicht, um das Schwingungsverhalten der Getriebeglocke zu verbessern.

Es besteht ein ständiges Bedürfnis Geräuschemissionen von Windkraftanlagen zu reduzieren.

Es ist die Aufgabe der Erfindung, Maßnahmen aufzuzeigen, die eine Windkraftanlagen mit geringen Geräuschemissionen ermöglichen.

Die Lösung der Aufgabe erfolgt durch eine Getriebeglocke mit den Merkmalen des Anspruchs 1, eine Getriebeanordnung mit den Merkmalen des Anspruchs 14 und ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können, wobei der Schutzbereich durch die Ansprüche bestimmt wird. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft eine Getriebeglocke zur Befestigung eines Windgetriebes in einer Windkraftanlage, mit einem ersten Befestigungsbereich zur Befestigung mit einem Getriebegehäuse des Windgetriebes und einem zu dem ersten Befestigungsbereich über einen Ringkörper axial beabstandeten zweiten Befestigungsbereich zur Befestigung mit einem Gondelgehäuse der Windkraftanlage und/oder mit einem eine Windrotorwelle eines Windrotors der Windkraftanlage lagernden Hauptwellenlager, wobei der Ringkörper mindestens zwei zueinander unterschiedlich ausgestalte Aussparungen zur Körperschalldämpfung aufweist.

Durch die mindestens zwei, insbesondere mindestens vier, vorzugsweise mindestens sechs oder noch mehr, unterschiedlich ausgestalten Aussparungen ist die Getriebeglocke selbst unsymmetrisch ausgestaltet. Diese unabhängig von der Anzahl der Planetenräder des Windgetriebes erreichte Asymmetrie in der Formgestaltung der Getriebeglocke kann bereits ausreichend sein, resonanzbedingte Schwingungen innerhalb der Getriebeglocke während des laufenden Betriebs des Windgetriebes zu verhindern. Stattdessen können die unterschiedlich ausgestalteten Aussparungen bei einer anregenden Frequenz unterschiedliche sich überlagernde Schwingungen erzeugen, die über einen verbreiterten Frequenzbereich verteilt sind und in der Regel über einen großen Frequenzbereich der anregenden Frequenz nicht hörbare Schwingungen enthalten. Selbst wenn im Einzelfall hörbare Schwingungen in der Getriebeglocke auftreten sollten, ist einerseits eine resonanzbedingte Selbstverstärkung vermieden oder zumindest reduziert und andererseits die Lautstärke der hörbaren Schwingung nur so niedrig, dass der abgestrahlte Körperschall außerhalb der Gondel der Windkraftanlage kaum zu hören wäre. Eine Anpassung der Anzahl der Aussparungen an Parameter des anzubindenden Windgetriebes ist nicht erforderlich, so dass die Getriebeglocke unabhängig von der konkreten Ausgestaltung des Windgetriebes im Inneren des Windgetriebes baureihenübergreifend eine Dämpfung von Körperschall erreichen kann. Die identisch ausgeformte Getriebeglocke kann dadurch für eine Vielzahl unterschiedlicher Windgetriebe verwendet werden, so dass durch eine Massenproduktion der Getriebeglocke die Herstellungskosten reduziert werden können. Durch die mit Hilfe der unterschiedlich ausgestalteten Aussparungen erreichten Asymmetrie in der Getriebeglocke selbst kann in einer Vielzahl von unterschiedlich ausgestalteten Windkraftanlagen eine Reduzierung von Geräuschemissionen ermöglicht werden.

Die Getriebeglocke kann einen aus dem Windgetriebe herausragende Teil einer Getriebewelle, insbesondere Nabe eines Planetenträgers, und/oder einen aus dem Hauptwellenlager herausragenden Teil der Windrotorwelle zumindest teilweise abdecken und insbesondere einen axialen Abstand zwischen dem Hauptwellenlager und dem Windgetriebe überbrücken. Vorzugsweise ist in einem in radialer Richtung von der Getriebeglocke, insbesondere von dem Ringkörper überdeckten Axialbereich eine mechanische Befestigung zwischen der Windrotorwelle und der Getriebewelle vorgesehen. Vorzugsweise ist die Getriebeglocke zusätzlich, insbesondere als ein separat ausgeführtes Bauteil, zu dem Hauptwellenlager der Windrotorwelle und dem Windgetriebe vorgesehen. Die Getriebeglocke ist insbesondere unbeweglich feststehend im Antriebsstrang der Windkraftanlage vorgesehen und hierzu mit ebenfalls unbeweglich feststehenden Bauteilen, insbesondere das Getriebegehäuse, das Hauptwellenlager, einem Maschinenrahmen und/oder der Gondel der Windkraftanlage befestigt. Besonders bevorzugt ist die Getriebeglocke einschließlich des Ringkörpers, des ersten Befestigungsbereich und des zweiten Befestigungsbereich urformend, beispielsweise durch Gießen oder Sintern, als einstückiges Bauteil erzeugt worden, wobei insbesondere die Aussparungen bereits während des Urform-Prozesses ebenfalls ausgebildet wurden. Gegebenenfalls kann nach dem Urform-Prozesses noch eine Nachbearbeitung, beispielsweise durch Putzen, erfolgen, mit deren Hilfe insbesondere die Formgestaltung der Aussparungen möglichst präzise sichergestellt werden kann.

Der erste Befestigungsbereich ist zur Befestigung mit dem einem Getriebegehäuse des Windgetriebes ausgebildet. Beispielsweise ist eine Flanschverbindung zwischen zwei nach radial außen abstehenden Flanschen vorgesehen. Es kann aber auch eine Verschraubung in axialer und/oder in radialer Richtung mit einem Innengewinde vorgesehen sein.

Das Getriebegehäuse kann beispielsweise zweischalig mit einer Unterschale und einer Oberschale ausgestaltet sein. Es ist aber auch möglich, dass mehrere Gehäuseteile in axialer Richtung hintereinander vorgesehene sind, die miteinander verbunden sein können. Insbesondere wenn eine Getriebestufe des Windgetriebes als Planetengetriebe mit einem feststehenden Hohlrad ausgestaltet ist, ist es möglich, dass eine nach radial außen weisende Mantelfläche des Hohlrads einen Gehäuseteil des Getriebegehäuses ausbildet und an einer oder an beiden Axialseiten des Hohlrads separat ausgeführte Gehäuseteile vorgesehen sind. Besonders bevorzugt ist das Getriebegehäuse frei von abstehenden Drehmomentstützen, wodurch der Bauraumbedarf für das Windgetriebe besonders gering ist. Wenn mit dem Getriebegehäuse keine Drehmomentstützen verbunden sind, die ein Drehmoment an einen Maschinenträger und/oder an die Gondel abstützen können, liegt keine von den Drehmomentstützen versteifende Wirkung vor, so dass das Getriebegehäuse und die mit dem Getriebegehäuse befestigte Getriebeglocke vergleichsweise schwingungssensitiv sind. Durch die Wirkung der Aussparungen, eine Körperschalldämpfung bereitstellen zu können, kann ein Entfall der Drehmomentstützen jedoch zugelassen werden, ohne dadurch unnötige Geräuschemissionen in Kauf nehmen zu müssen, so dass die Kosten und der Bauraumbedarf für die zusätzliche mindestens eine Drehmomentstütze eingespart werden können.

Der zweite Befestigungsbereich kann zur direkten oder indirekten Befestigung mit dem Gondelgehäuse und/oder mit dem Hauptwellenlager ausgebildet sein. Beispielsweise kann die Getriebeglocke das ganz oder teilweise innerhalb des Gondelgehäuses der Gondel vorgesehene Hauptwellenlager umgreifen und direkt mit dem Gondelgehäuse befestigt sein. Vorzugsweise ist der zweite Befestigungsbereich mit dem Hauptwellenlager, insbesondere mit einem unbeweglich feststehenden Lagergehäuse des Hauptwellenlagers, befestigt, so dass die Getriebeglocke auch im Hauptwellenlager auftretende Schwingungen dämpfen kann. Die Getriebeglocke kann dadurch auch außerhalb des Windgetriebes auftretende Schwingungen dämpfen und ein Abstrahlen von Körperschall reduzieren.

Der Ringkörper der Getriebeglocke kann in axialer Richtung zwischen dem ersten Befestigungsbereich und dem zweiten Befestigungsbereich vorgesehen sein und den axialen Abstand zwischen dem ersten Befestigungsbereich und dem zweiten Befestigungsbereich, vorzugsweise einstückig, überbrücken. Der Ringkörper kann abgesehen von den Aussparungen im Wesentlichen auf einen rotationssymmetrischen Grundkörper als Halbzeug basieren, der gedanklich als Ausgangskörper für die Ausgestaltung der unterschiedlich ausgestalteten Aussparungen dienen kann.

Die jeweilige Aussparung ist primär zur Körperschalldämpfung vorgesehen und kann hierzu entsprechend ausgeformt sein. Insbesondere sind die zur Körperschalldämpfung vorgesehenen Aussparungen ausschließlich im Ringkörper, also nicht in dem ersten Befestigungsbereich oder dem zweiten Befestigungsbereich, vorgesehen, da der den axialen Abstand zwischen den Befestigungsbereichen überbrückende Ringkörper im Vergleich zu den Befestigungsbereichen am ehesten zu Schwingungen neigt und etwaig entstehender Körperschall im Bereich des Ringkörpers gedämpft beziehungsweise getilgt werden kann. Die jeweilige Aussparung kann als flächige Materialverjüngung mit einer geringeren Materialstärke als in dem außerhalb der Aussparung vorliegenden Bereich ausgestaltet sein, so dass die Aussparung insbesondere eine geringere als die durchschnittliche Materialstärke des Ringkörpers aufweisen kann. Vorzugsweise beträgt die Materialstärke des Ringkörpers im Bereich der Aussparung Null, das heißt die Aussparung ist als Durchgangsöffnung ausgebildet.

Die unterschiedliche Ausgestaltung der Aussparungen zeichnet sich insbesondere dadurch aus, dass es nicht möglich ist die eine Aussparung durch eine Drehung der einen Aussparung um einer designierte (Haupt-)Drehachse des Windgetriebes und/oder der Windrotorwelle in exakte Übereinstimmung mit der anderen Aussparung zu bringen. Für eine exakte Übereinstimmung der einen Aussparung mit der anderen Aussparung ist zusätzlich zu der gedachten Drehung der einen Aussparung um die Drehachse mindestens eine weitere gedankliche Transformation erforderlich, sofern eine exakte Übereinstimmung nach der Durchführung einer endlichen Anzahl an Transformationen überhaupt möglich ist. Besonders bevorzugt sind die Aussparungen derart verschieden ausgeformt, dass auch eine beliebige Anzahl affiner Transformationen die eine und die andere Aussparung nicht in Deckung bringen kann. Insbesondere sind die unterschiedlich ausgestalteten Aussparungen linear unabhängige Flächen.

Die Körperschalldämpfung, die von den unterschiedlich ausgeformten Aussparungen erreicht werden kann, kann insbesondere von der Getriebeglocke ansonsten abgestrahlten hörbaren Schall durch Dämpfung und/oder Tilgung reduzieren. Hierbei ist es möglich, das trotzdem von der Getriebeglocke abgestrahlter Körperschall in Frequenzen auftritt, die für das menschliche Ohr zu hoch oder zu niedrig sind, wobei vorzugsweise auch Infraschall insbesondere mit Hilfe elastische Dämpfungselemente möglichst eliminiert sein kann. Von der Getriebeglocke abgestrahlter hörbarer Körperschall kann insbesondere nur mit einer Lautstärke auftreten, die außerhalb der Gondel nicht mehr von einem menschlichen Gehör wahrgenommen werden kann.

Ein von den Aussparungen verschiedener verbleibender Materialbereich der Getriebeglocke kann bezüglich seiner dreidimensionalen Ausgestaltung derart ausgeformt sein, dass Anforderungen an die Steifigkeit, insbesondere zur Abstützung von "Yaw-" und "Tild"-Schwingungen, bei einem Gieren ("Yaw") und/oder Nicken ("Tild" oder "Pitch") durch von einer am Windgetriebe angeschlossenen elektrischen Maschine in die Getriebeglocke eingeleiteten Schwingungen, erfüllt werden können. Dadurch kann mit Hilfe der Aussparungen nicht nur eine Körperschalldämpfung, sondern auch eine Reduktion des Materialeinsatzes für die Getriebeglocke erreichet werden, wodurch das Gewicht und die Herstellungskosten reduziert werden können.

Insbesondere ist vorgesehen, dass die mindestens zwei zueinander unterschiedlich ausgestalteten Aussparungen sich bezüglich einer Position ihres Flächenschwerpunkts in axialer Richtung und/oder ihrer Flächengröße und/oder ihrer Formgestaltung und/oder ihrer Ausrichtung in tangentialer Richtung und axialer Richtung unterscheiden. Derartige Unterschiede in der Ausgestaltung der Aussparungen können bereits eine Wirkung zur Körperschalldämpfung bereitstellen, wobei vorzugsweise mehrere dieser Unterschiede kombiniert vorliegen können. Besonders bevorzugt, sind nicht nur zwei zueinander verschiedene Arten von Aussparungen, sondern drei oder mehr jeweils zueinander unterschiedlich ausgeformte Arten an Aussparungen vorgesehen, die sich untereinander in einem oder mehr der genannten Unterschiede unterscheiden können. Beispielsweise kann die eine Aussparung einen eckigen und die andere Aussparung einen gerundeten Rand aufweisen, wobei die Position in axialer Richtung und/oder die Flächengröße und/oder die Ausrichtung gleich oder in Teilen oder in Gänze verschieden sein können. Beispielsweise kann die eine Aussparung eine maximale Erstreckung in einer ersten Richtung, beispielsweise in der axialen Richtung, und die andere Aussparung eine maximale Erstreckung in einer von der ersten Richtung verschiedenen zweiten Richtung, beispielsweise in Umfangsrichtung, aufweisen, wobei die Position in axialer Richtung und/oder die Flächengröße und/oder die Formgestaltung gleich oder in Teilen oder in Gänze verschieden sein können.

Vorzugsweise stellen die Formgestaltung mindestens zwei zueinander unterschiedlich ausgestalte Aussparungen eine von einer Identität verschiedene affine Abbildung zueinander dar. Die affine Abbildung der einen Aussparung zu der anderen Aussparung kann insbesondere Gegenstand einer Parallelverschiebung und/oder einer Spiegelung und/oder einer Skalierung und/oder einer Drehung und/oder einer Scherung sein, wobei eine identische Abbildung als Ergebnis der affinen Abbildung ausgeschlossen ist. Da die eine Aussparung eine affine Abbildung der anderen Aussparung darstellt, sind die Aussparungen hinreichend ähnlich, um bereits im Konstruktionsprozess ein mögliches Schwingungsverhalten vorhersehen und antizipieren zu können. Dies ermöglicht es im Konstruktionsprozess eine besonders vielversprechende Ausgestaltung verschiedener Aussparungen zu identifizieren und nur für diesen Kandidaten eine Überprüfung an einem Prototyp durchzuführen. Dies kann den Konstruktionsprozess vereinfachen und die zugehörigen Entwicklungskosten gering halten.

Besonders bevorzugt sind eine erste Art zueinander unterschiedlich ausgestalteter und/oder zueinander affine Abbildungen darstellende Aussparungen und eine zweite Art zueinander unterschiedlich ausgestalteter und/oder zueinander affine Abbildungen darstellende Aussparungen vorgesehen sind, wobei die Aussparungen der ersten Art zu den Aussparungen der zweiten Art von einer affinen Abbildung verschieden ausgeformt sind. Die affine Abbildung der einen Aussparung zu der anderen Aussparung kann insbesondere Gegenstand einer Parallelverschiebung und/oder einer Spiegelung und/oder einer Skalierung und/oder einer Drehung und/oder einer Scherung sein, wobei insbesondere eine identische Abbildung als Ergebnis der affinen Abbildung ausgeschlossen sein soll. Innerhalb der jeweiligen Art von Aussparungen kann das Schwingungsverhalten vergleichsweise gut vorhergesagt werden. Da aber auch nicht affine Abbildungen von Aussparungen vorgesehen sind, kann der Effekt der Körperschalldämpfung überproportional stark ausfallen. Bei einem vertretbaren Aufwand im Konstruktionsprozess und im Prototypenbau kann eine besonders starke Körperschalldämpfung erreicht werden.

Insbesondere ist vorgesehen, dass die Aussparungen in radialer Richtung vollständig geöffnet durch den Ringkörper hindurch verläuft und vorzugsweise ausschließlich von dem Material des Ringkörpers begrenzt ist. Die Aussparungen können dadurch ausschließlich im Ringkörper als Durchgangsöffnung ausgebildet sein.

Vorzugsweise weist der Ringkörper an einem Rand der jeweiligen Aussparung eine Materialverdickung auf. Die Materialverdickung kann entlang des Rands unterschiedlich oder gleich stark sein. Die Materialverdickung kann an dem Rand der Aussparung angreifende Kräfte an der Aussparung herum ableiten und eine Beschädigung des Rands der Aussparung durch Spannungsspitzen verhindern.

Besonders bevorzugt sind mindestens zwei am Rand verschiedener Aussparungen ausgebildete Materialverdickungen über eine Versteifungsrippe miteinander verbunden, wobei insbesondere die Versteifungsrippe durch eine weitere Materialverdickung des Ringkörpers ausgebildet ist. Die Versteifungsrippe weist insbesondere eine geringe Erstreckung quer zu ihrer Längsrichtung als die geringste Erstreckung der jeweiligen Aussparung auf. Vorzugsweise verläuft die Versteifungsrippe im Wesentlichen in Umfangsrichtung. Die Versteifungsrippe kann durch ihre versteifende Wirkung ein Schwingen im Bereich der Versteifungsrippe verhindern oder zumindest erschweren, so dass für die Erzeugung von Körperschall nur entsprechend kurze frei schwingungsfähige Wegstrecken mit entsprechend hohen Frequenzen für den Körperschall verbleiben, die von dem menschlichen Ohr eher nicht wahrgenommen werden können.

Insbesondere ist der erste Befestigungsbereich und/oder der zweite Befestigungsbereich durch einen im Vergleich zum Ringkörper nach radial außen und/oder nach radial innen abstehenden Axialbereich definiert. Der erste und/oder zweite Befestigungsbereich kann beispielsweise durch einen Flansch ausgebildet werden.

Vorzugsweise ist in der jeweiligen Aussparung ein unter Schwingungseinfluss elastisch verformbares Dämpfungselement eingesetzt, wobei insbesondere das Material des Dämpfungselements von dem Material des Ringkörpers verschieden ist, wobei vorzugsweise das Dämpfungselement in unterschiedliche Richtungen innerhalb einer abgewickelten Umfangsrichtungsebene unterschiedliche Steifigkeiten und/oder unterschiedliche Federkennlinien aufweist. Vorzugsweise kann das Dämpfungselement im Vergleich zum übrigen Ringkörper ein anders Verformungsverhalten unter Last bereitstellen. Dies ermöglicht es weitere Dämpfungseffekte aufzuprägen, die auch in von dem übrigen Ringkörper eher nicht so gut gedämpften Frequenzbereichen eine Körperschalldämpfung bereitstellen können. Mit Hilfe des Dämpfungselements kann die Körperschalldämpfung der Getriebeglocke weiter verbessert, individualisiert und/oder an sich verändernde Randbedingungen angepasst werden, ohne dass hierzu ein Austausch der Getriebeglocke erforderlich wäre.

Besonders bevorzugt ist die Flächengröße der Aussparungen zu dem Zweck ein Werkzeug, insbesondere Schraubendreher, zur Manipulation von innerhalb des Ringkörpers positionierten Komponenten einzuführen dimensioniert. Die Flächengröße zumindest eines Teils der Aussparungen, vorzugsweise sämtlicher Aussparungen, kann eine Mindestgröße aufweisen, die es ermöglicht mit dem Werkzeug zu Wartungs- und/oder Montagezwecken an das Innere der Getriebeglocke zu gelangen. Beispielsweise ist es durch die so dimensionierte jeweilige Aussparung möglich eine Verschraubung zwischen einer Getriebewelle des Windgetriebes und der Windrotorwelle bei bereits montierter Getriebeglocke innerhalb eines von der Getriebeglocke begrenzten Volumens durchzuführen. Die Montage- und Wartungsfreundlichkeit kann dadurch verbessert sein.

Insbesondere ist vorgesehen, dass der erste Befestigungsbereich und/oder der zweite Befestigungsbereich einen Lagersitz zur Lagerung eines Planetenträgers des Windgetriebes oder zur Lagerung der Windrotorwelle aufweist und/oder einstückig ausbildet. Eine separate Lagerung in dem Windgetriebe beziehungsweise in dem Hauptwellenlager kann eingespart werden. Dadurch kann insbesondere ein lagerloser Planetenträger oder eine Sonnenradwelle, der/die innerhalb des Getriebegehäuses des Windgetriebes keine unmittelbar an dem Planetenträger angreifendes Lager aufweist, außerhalb des Windgetriebes in der Getriebeglocke einseitig gelagert werden. Dadurch kann über den ausschließlich in der Getriebeglocke gelagerten Planetenträger beziehungsweise Sonnenradwelle ein axiales Spiel innerhalb einer Kurzverzahnung im Inneren des Windgetriebes mit einem im Drehmomentfluss nachfolgenden Getriebekomponente ausgenutzt werden, um einen Axialversatz zwischen dem Windgetriebe und der Windrotorwelle auszugleichen, wobei die axiale Relativposition des einseitig gelagerten Planetenträger beziehungsweise der einseitig gelagerten Sonnenradwelle durch den einstückigen oder separat ausgeführten Lagersitz in der Getriebeglocke vorgegeben werden kann.

Vorzugsweise ist der erste Befestigungsbereich einteilig mit dem Getriebegehäuse oder einem Getriebegehäuseteil des Windgetriebes und/oder der zweite Befestigungsbereich einteilig mit einem Lagergehäuse des Hauptwellenlager ausgebildet. Die Bauteileanzahl kann dadurch reduziert und die Bauteilintegration erhöht werden.

Besonders bevorzugt ist der erste Befestigungsbereich mit dem Ringkörper und/oder der zweite Befestigungsbereich mit dem Ringkörper und/oder ein erster Teilkörper des Ringkörpers mit einem zweiten Teilkörper des Ringkörpers über eine Schweißverbindung verbunden. Durch die geschweißte Herstellung der Getriebeglocke ergeben sich im Bereich der Schweißnähte Gefügeveränderungen der miteinander gefügten Teile, die wiederum eine frei schwingende Strecke innerhalb der Getriebeglocke reduzieren können. Die Entstehung sowie das Übertragen von angeregten Schwingungen in der Getriebeglocke sind dadurch zumindest reduziert. Zudem können sich mit Hilfe der Schweißverbindung zusätzliche Steifigkeiten ergeben, welche die Schwingungsfähigkeit der Getriebeglocke reduzieren und eine bessere Abstützung von im Betrieb auftretenden Kräften und Momenten ermöglicht.

Ein weiterer Aspekt der Erfindung betrifft eine Getriebeanordnung für eine Windkraftanlage mit einem mindestens eine als Planetengetriebe ausgestaltete Getriebestufe aufweisenden Windgetriebe und an einer zu einem Windrotor weisenden Axialseite mit einem Getriebegehäuse des Windgetriebes befestigten Getriebeglocke, die wie vorstehend beschrieben aus- und weitergebildet sein kann, wobei insbesondere die Anzahl der Aussparungen der Getriebeglocke durch die Anzahl der Planetenräder mindestens einer als Planetengetriebe ausgestalteten Getriebestufe teilbar ist, wobei vorzugsweise die Anzahl der Aussparungen durch die Anzahl der Planetenräder sämtlicher als Planetengetriebe ausgestalteten Getriebestufe teilbar ist. Durch die mit Hilfe der unterschiedlich ausgestalteten Aussparungen erreichten Asymmetrie in der Getriebeglocke selbst kann in einer Vielzahl von unterschiedlich ausgestalteten Windkraftanlagen eine Reduzierung von Geräuschemissionen ermöglicht werden.

Ein weiterer Aspekt der Erfindung betrifft ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Getriebeglocke, die wie vorstehend beschrieben aus- und weitergebildet sein kann, oder der Getriebeanordnung, die wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der der Getriebeglocke oder der Getriebeanordnung, insbesondere durch 3D-Druck, und/oder bei einer Verarbeitung durch eine Datenverarbeitungseinrichtung zur Durchführung einer technischen Simulation eine Simulation der Funktionsweise der Getriebeglocke oder der Getriebeanordnung durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen und gegebenenfalls mit an einer real produzierten erfindungsgemäßen Vorrichtung und/oder an einem Prototyp der erfindungsgemäßen Vorrichtung ermittelten Messdaten zu vergleichen. Die Datenpakete des Datenagglomerat sind an die erfindungsgemäße Ausgestaltung der jeweiligen vorstehend beschriebenen erfindungsgemäßen Vorrichtung, das heißt die Getriebeglocke und/oder die Getriebeanordnung, speziell angepasst, um die erfindungsgemäße Wechselwirkung der Bestandteile der erfindungsgemäßen Vorrichtung bei der Verarbeitung in der Datenverarbeitungseinrichtung adäquat abbilden zu können. Die Datenpakete können insbesondere räumlich verteilt gespeichert sein, aber derart aneinander angepasst sein, dass in dem Fall, dass alle Datenpakete in einer gemeinsamen Datenverarbeitungseinrichtung zusammengeführt sind, das so zusammengesetzte Datenagglomerat alle erforderlichen Daten für eine additive Fertigung und/oder eine technische Simulation mit Hilfe der Datenverarbeitungseinrichtung für die erfindungsgemäße Vorrichtung bereitstellt. Beispielsweise sind die Datenpakete jeweils separate Teile einer Datenbibliothek ("Library"), die zur Ausbildung des Datenagglomerats zusammengeführt und bezüglich ihrer relativen Abmessungen zueinander und/oder absoluten Abmessungen und/oder Werkstoffeigenschaften korrespondierend zu der jeweiligen erfindungsgemäßen Vorrichtung aneinander angepasst sind. Das Datenagglomerat kann in der Art eines sogenannten "digital twin" eine virtuelle Verkörperung der jeweiligen erfindungsgemäßen Vorrichtung darstellen, die eine virtuelle Untersuchung in Form einer Simulation oder eine reale Vergegenständlichung mit Hilfe eines additiven Fertigungsverfahrens ermöglicht. Ein derartiger digitaler Zwilling ist beispielsweise in US 2017/286572 A1 dargestellt, auf dessen Offenbarungsgehalt als Teil der Erfindung hiermit Bezug genommen wird.

Wenn die Datenverarbeitungseinrichtung der Werkzeugmaschine das Datenagglomerat verarbeitet, wird die erfindungsgemäße Vorrichtung hergestellt, so dass nach der Verarbeitung des Datenagglomerats in der Datenverarbeitungseinrichtung die erfindungsgemäße Vorrichtung, zumindest in Form eines Prototyps, erhalten wird. Insbesondere kann jeweils ein Datenpaket einen separat ausgeführten Bestandteil der jeweiligen zugeordneten erfindungsgemäßen Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Insbesondere ist es möglich mit Hilfe der jeweiligen Datenpakete die verschiedenen Bestandteile der jeweiligen Vorrichtung separat und gegebenenfalls aus unterschiedlichen Materialen durch additive Fertigung zu erzeugen und nachfolgend zu einem Prototyp der jeweiligen Vorrichtung zusammenzusetzen. Die Aufteilung der Daten des Datenagglomerats auf verschiedene Datenpakete ermöglicht dadurch in einfacher Weise eine sequentielle additive Fertigung von relativ zueinander bewegbaren Bestandteilen der jeweiligen Vorrichtung in Form eines Bausatzes ("Kit of parts"), der dazu hergerichtet ist für die erfindungsgemäße Wechselwirkung der Bestandteile des Prototyps für die Lösung des der Erfindung zu Grunde liegenden Problems nur noch sinnfällig zusammengesetzt zu werden. Zusätzlich oder alternativ ist es möglich mit Hilfe der Datenpakete des Datenagglomerats in einer virtuellen Umgebung während einer technischen Simulation die einzelnen Bestandteile der jeweiligen Vorrichtung, ihre Wechselwirkungen, den physikalische Zustand und/oder die Veränderung physikalischer Parameter in Abhängigkeit verschiedener Randbedingungen und/oder über die Zeit der zugehörigen erfindungsgemäßen Vorrichtung zu berechnen und/oder vorherzusagen sowie für die Überprüfung, ob die erfindungsgemäße Vorrichtung auf Basis der angenommenen Ausgestaltung und unter Berücksichtigung der angenommen simulierten Einflüsse für den beabsichtigten Einsatzzweck gut genug geeignet ist, weiterzuverwenden. Wenn das Datenagglomerat von einer die Simulationsumgebung abbildenden Datenverarbeitungseinrichtung verarbeitet wird, ist es möglich das Verhalten der erfindungsgemäßen Vorrichtung unter Berücksichtigung von, sich insbesondere verändernden, Randbedingungen untersuchen zu können. Dadurch ist es beispielsweise möglich Fliehkrafteffekte bei einzelnen Bestandteilen der erfindungsgemäßen Vorrichtung in Abhängigkeit von verschiedenen statischen und/oder dynamischen Lasten und/oder unterschiedlichen Betriebstemperaturen zu untersuchen, wobei derartige Simulationsergebnisse in die Erstellung eines Dauerfestigkeitsnachweis einfließen können. Vorzugsweise werden die nach der Verarbeitung des Datenagglomerats in der Datenverarbeitungseinrichtung für die Simulationsumgebung erhaltenen Simulationsergebnisse gespeichert, um diese mit an einer real produzierten erfindungsgemäßen Vorrichtung und/oder an einem Prototyp der erfindungsgemäßen Vorrichtung ermittelten Messdaten zu vergleichen. Dadurch ist es möglich die Güte der mit Hilfe des Datenagglomerats erhaltenen Simulationsergebnisse zu beurteilen und/oder, insbesondere bei besonders starken Abweichungen, Messfehler und/oder eine fehlerhafte Messung zu identifizieren. Eine zerstörungsfreie Qualitätskontrolle der erfindungsgemäßen Vorrichtung ist dadurch vereinfacht und verbessert.

Durch das Datenagglomerat ist eine kostengünstige Herstellung von Prototypen und/oder computerbasierten Simulationen ermöglicht, um die Funktionsweise der betrachteten Vorrichtung zu studieren, Probleme im konkreten Anwendungsfall zu identifizieren und Verbesserungen zu finden. Die Lösung der der Erfindung zugrunde liegenden Aufgabe kann mit Hilfe des Datenagglomerats leicht und kostengünstig überprüft werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können, wobei der Schutzbereich durch die Ansprüche bestimmt wird. Es zeigen:
Fig. 1: eine schematische perspektivische Ansicht einer Windkraftanlage,
Fig. 2: eine schematische perspektivische Ansicht einer Getriebeglocke für die Windkraftfanlage aus Fig. 1,
Fig. 3: eine schematische Seitenansicht der Getriebeglocke aus Fig. 2 und
Fig. 4: eine in Vergleich zu der Getriebeglocke aus Fig. 3 in Umfangsrichtung versetzte schematische Seitenansicht der Getriebeglocke aus Fig. 2.

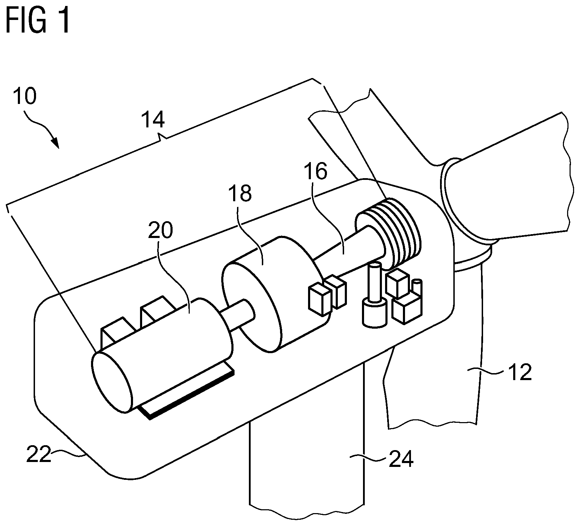

Die in Fig. 1 dargestellte Windkraftanlage 10 kann zur Erzeugung von elektrischer Energie aus Windkraft verwendet werden. Hierzu weist die Windkraftanlage 10 einen Windrotor 12 auf, der durch Wind windkraftbetrieben in Drehung versetzt werden kann. Der Windrotor 12 ist an einen Antriebsstrang 14 angekoppelt. Hierzu ist der Windrotor 12 mit einer Windrotorwelle 16 verbunden, die innerhalb des Antriebsstrangs 14 mit einem Windgetriebe 18 gekoppelt ist, um das über den Windrotor 12 und die Windrotorwelle 16 eingeleitete Drehmoment zu wandeln. Das in dem Windgetriebe 18 gewandelte Drehmoment wird über eine Motorwelle 19 einer im Generatormodus betriebenen elektrischen Maschine zugeführt, die einen Generator 20 ausbilden kann. Die von der elektrischen Maschine erzeugte elektrische Energie kann einer wiederaufladbaren Batterie und/oder einem Stromnetz zugeführt werden. Der Antriebsstrang 14 ist im dargestellten Ausführungsbeispiel vollständig in einer Gondel 22 untergebracht, die an einem oberen freien Ende eines Standturms 24 angebracht ist. Der Windrotor 12, das Windgetriebe 18 und der Generator 20 können koaxial zueinander angeordnet sein und vorzugsweise zur Horizontalen angeschrägt verlaufen. Von dem Generator 20 kann durch das Windgetriebe 18 hindurch bis zum Windrotor 12 ein Pitchrohr verlaufen, um elektrische Leitungen zu einer Blatteinstellwinkelregelung (Pitchregelung) des Windrotors 12 führen zu können.

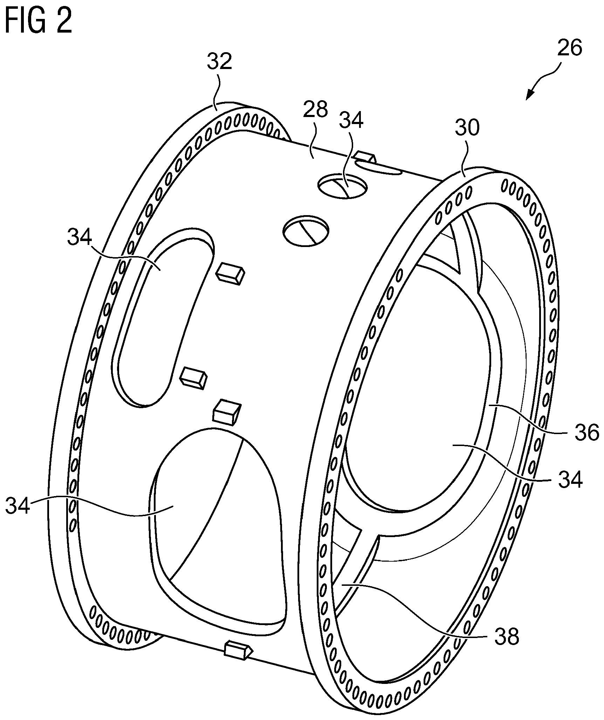

Die in einem Hauptwellenlager gelagerte Windrotorwelle 16 kann mit einer zum Windrotor 12 weisenden eingangsseitigen Getriebewelle des Windgetriebes 18 innerhalb der in Fig. 2 dargestellten Getriebeglocke 26 verbunden sein. Das Windgetriebe 18 weist mindestens eine Getriebestufe auf, wobei vorzugsweise mindestens eine Getriebestufe als Planetengetriebe ausgestaltet ist. Die eingangsseitigen Getriebewelle ist insbesondere durch eine Nabe eines lagerlosen Planetenträgers ausgebildet. Die Getriebeglocke 26 weist einen Ringkörper 28 auf, an dessen axialen Enden, insbesondere einstückig, ein erster Befestigungsbereich 30 und ein zweiter Befestigungsbereich 32 angesetzt sind. Beispielsweise stehen der erste Befestigungsbereich 30 und der zweite Befestigungsbereich 32 nach radial außen ab, insbesondere um einen Flansch für eine Flanschverbindung auszubilden. Der erste Befestigungsbereich 30 kann mit einem Getriebegehäuse des Windgetriebes 18 verbunden werden, während der zweite Befestigungsbereich 32 mit dem Hauptwellenlager und/oder mit einem Gondelgehäuse der Gondel 22 verbunden werden kann.

In dem Ringkörper 28 sind mehrere als Durchgangsöffnungen ausgestaltete Aussparungen 34 ausgebildet, die sich bezüglich ihrer Position in Axialrichtung, ihrer Flächengröße, ihrer Formgestaltung und/oder Ausrichtung innerhalb des Ringkörpers 28 unterscheiden, wodurch die jeweilige Aussparung 34 primär einen Betrag zu einer Körperschalldämpfung leistet, wenn die Getriebeglocke 26 im laufenden Betrieb des Antriebsstrangs 14 in Schwingung versetzt wird. Im Gegensatz zu den Aussparungen 34 im Ringkörper 28 sind in den Befestigungsbereichen 30, 32 vorgesehene Öffnungen primär zur Befestigung der Getriebeglocke 26 vorgesehen und leisten keinen signifikant messbaren Beitrag zu einer Körperschalldämpfung. Eine Mindestgröße der jeweiligen Aussparung 34 ist deutlich größer als ein maximaler Durchmesser von zur Verbindung der Befestigungsbereichen 30, 32 verwendeten Schrauben, so dass die jeweiligen Aussparungen 34 so groß sein können, dass ein Werkzeug oder bei einzelnen Aussparungen 34 sogar eine Hand eines Monteurs oder Monteurin hindurchgeführt werden kann. Besonders bevorzugt ist der Ringkörper 28 in einem in Schwerkraftrichtung unteren Winkelbereich, beispielsweise von 30°± 10° durchgängig und frei von Aussparungen 34 ausgeführt, da die Getriebeglocke 26 in diesem Winkelbereich auf einer Unterlage, beispielsweise ein Maschinenträger, aufliegen kann und durch die Auflage selbst eine zu einer Körperschalldämpfung führende Versteifung vorliegen kann.

Wie in Fig. 2 dargestellt ist, kann die jeweilige Aussparung 34 einen durch eine Materialverdickung des Ringkörpers 28 bereitgestellten verstärkten Rand 36 aufweisen. Insbesondere weist der Ringkörpers 28 eine, vorzugsweise ebenfalls durch eine Materialverdickung ausgebildete, Versteifungsrippe 38 auf, die insbesondere im Wesentlichen in Umfangsrichtung verläuft. Vorzugsweise kann die Versteifungsrippe 38 zwei verstärke Ränder 36 verschiedener Aussparungen 34 miteinander verbinden, wobei es hierbei möglich ist, dass sich die Versteifungsrippe 38 nicht in dem gleichen Axialbereich des Ringkörpers 28 vollständig geschlossen in Umfangsrichtung erstreckt, sondern nur in Teilwinkelbereichen vorgesehen ist.

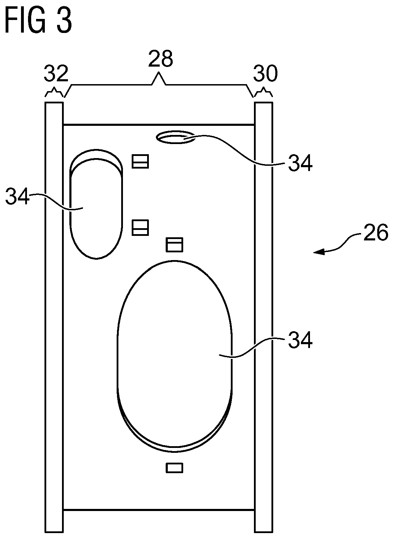

Wie in Fig. 3 dargestellt ist, können beispielsweise unterschiedlich lange und unterschiedlich breite oval-förmige Aussparungen 34 vorgesehen sein, die zwar eine affine Abbildung zueinander darstellen, aber nicht identisch sind. Zudem können diese Aussparungen 34 in axialer Richtung sowie in Umfangsrichtung zueinander versetzt ausgebildet sein.

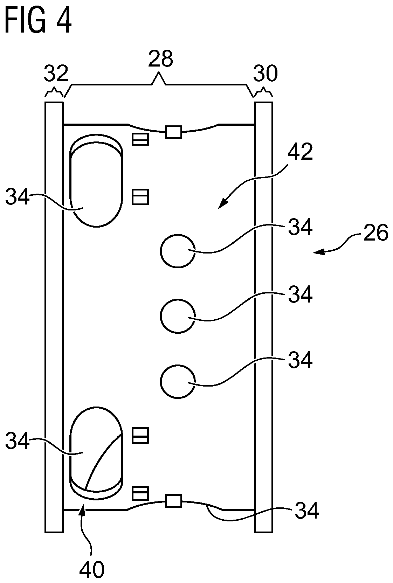

Wie in Fig. 4 dargestellt ist, kann auch eine erste Art 40 von beispielsweise oval-förmigen identischen Aussparungen 34 in einem gemeinsamen Axialbereich in Umfangsrichtung hintereinander vorgesehen sein, während gleichzeitig eine zweite Art 42 von beispielsweise kreisförmigen identischen Aussparungen 34 in einem gemeinsamen Axialbereich in Umfangsrichtung hintereinander vorgesehen sein können. Die erste Art 40 von Aussparungen 34 und die zweite Art 42 von Aussparungen 34 können sich bezüglich ihrer Position in Axialrichtung, ihrer Flächengröße, ihrer Formgestaltung und/oder Ausrichtung innerhalb des Ringkörpers 28 unterscheiden, wobei die Aussparungen 34 innerhalb ihrer jeweiligen Art 40, 42 identisch ausgeformt sein können. Vorzugsweise stellen die Aussparungen 34 der ersten Art 40 keine affine Abbildung der Aussparungen 34 der zweiten Art 42 dar.

Gegebenenfalls kann in mindestens einer der Aussparungen 34 ein unter Last elastisch verformbares Dämpfungselement eingesetzt sein, wobei das Dämpfungselement die Aussparung 34 ganz oder teilweise verschließen kann. Das Dämpfungselement kann beispielsweise aus einem thermoplastisch oder elastomeren Kunststoff hergestellt sein, wodurch das Dämpfungselement im Vergleich zu der das Dämpfungselement aufnehmenden Aussparung 34 einen anderen Frequenzbereich für eine Körperschalldämpfung dämpfen kann.

## Patentansprüche

1. Getriebeglocke (26) zur Befestigung eines Windgetriebes (18) in einer Windkraftanlage (10), mit
einem ersten Befestigungsbereich (30) zur Befestigung mit einem Getriebegehäuse des Windgetriebes (18) und
einem zu dem ersten Befestigungsbereich (30) über einen Ringkörper (28) axial beabstandeten zweiten Befestigungsbereich (32) zur Befestigung mit einem Gondelgehäuse der Windkraftanlage (10) und/oder mit einem eine Windrotorwelle (16) eines Windrotors (12) der Windkraftanlage (12) lagernden Hauptwellenlager, wobei der Ringkörper (28) mindestens zwei zueinander unterschiedlich ausgestalte Aussparungen (34) zur Körperschalldämpfung aufweist.

2. Getriebeglocke (26) nach Anspruch 1, wobei die mindestens zwei zueinander unterschiedlich ausgestalteten Aussparungen (34) sich bezüglich
einer Position ihres Flächenschwerpunkts in axialer Richtung und/oder
ihrer Flächengröße und/oder
ihrer Formgestaltung und/oder
ihrer Ausrichtung in tangentialer Richtung und axialer Richtung
unterscheiden.

3. Getriebeglocke (26) nach Anspruch 1 oder 2, wobei die Formgestaltung mindestens zwei zueinander unterschiedlich ausgestalte Aussparungen (34) eine von einer Identität verschiedene affine Abbildung zueinander darstellen.

4. Getriebeglocke (26) nach Anspruch einem der Ansprüche 1 bis 3, wobei eine erste Art (40) zueinander unterschiedlich ausgestalteter und/oder zueinander affine Abbildungen darstellende Aussparungen (34) und eine zweite Art (42) zueinander unterschiedlich ausgestalteter und/oder zueinander affine Abbildungen (34) darstellende Aussparungen (34) vorgesehen sind, wobei die Aussparungen der ersten Art (40) zu den Aussparungen (34) der zweiten Art (42) von einer affinen Abbildung verschieden ausgeformt sind.

5. Getriebeglocke (26) nach einem der Ansprüche 1 bis 4, wobei die Aussparungen (34) in radialer Richtung vollständig geöffnet durch den Ringkörper (28) hindurch verläuft und ausschließlich von dem Material des Ringkörpers (28) begrenzt ist.

6. Getriebeglocke (26) nach einem der Ansprüche 1 bis 5, wobei der Ringkörper (28) an einem Rand (36) der jeweiligen Aussparung (34) eine Materialverdickung aufweist.

7. Getriebeglocke (26) nach Anspruch 6, wobei mindestens zwei am Rand (36) verschiedener Aussparungen (34) ausgebildete Materialverdickungen über eine Versteifungsrippe (38) miteinander verbunden sind, wobei die Versteifungsrippe (38) durch eine weitere Materialverdickung des Ringkörpers (28) ausgebildet ist.

8. Getriebeglocke (26) nach einem der Ansprüche 1 bis 7, wobei der erste Befestigungsbereich (30) und/oder der zweite Befestigungsbereich (32) durch einen im Vergleich zum Ringkörper (28) nach radial außen und/oder nach radial innen abstehenden Axialbereich definiert ist.

9. Getriebeglocke (26) nach einem der Ansprüche 1 bis 8, wobei in der jeweiligen Aussparung (34) ein unter Schwingungseinfluss elastisch verformbares Dämpfungselement eingesetzt ist, wobei das Material des Dämpfungselements von dem Material des Ringkörpers (28) verschieden ist, wobei das Dämpfungselement in unterschiedliche Richtungen innerhalb einer abgewickelten Umfangsrichtungsebene unterschiedliche Steifigkeiten und/oder unterschiedliche Federkennlinien aufweist.

10. Getriebeglocke (26) nach einem der Ansprüche 1 bis 9, wobei die Flächengröße der Aussparungen (34) zu dem Zweck ein Werkzeug, insbesondere Schraubendreher, zur Manipulation von innerhalb des Ringkörpers (28) positionierten Komponenten einzuführen dimensioniert ist.

11. Getriebeglocke (26) nach einem der Ansprüche 1 bis 10, wobei der erste Befestigungsbereich (30) und/oder der zweite Befestigungsbereich (32) einen Lagersitz zur Lagerung eines Planetenträgers des Windgetriebes (18) oder zur Lagerung der Windrotorwelle (16) aufweist und/oder einstückig ausbildet.

12. Getriebeglocke (26) nach einem der Ansprüche 1 bis 11, wobei der erste Befestigungsbereich (30) einteilig mit dem Getriebegehäuse oder einem Getriebegehäuseteil des Windgetriebes (18) und/oder der zweite Befestigungsbereich (32) einteilig mit einem Lagergehäuse des Hauptwellenlager ausgebildet ist.

13. Getriebeglocke (26) nach einem der Ansprüche 1 bis 11, wobei der erste Befestigungsbereich (30) mit dem Ringkörper (28) und/oder der zweite Befestigungsbereich (32) mit dem Ringkörper (28) und/oder ein erster Teilkörper des Ringkörpers (28) mit einem zweiten Teilkörper des Ringkörpers (28) über eine Schweißverbindung verbunden ist.

14. Getriebeanordnung für eine Windkraftanlage (10) mit einem mindestens eine als Planetengetriebe ausgestaltete Getriebestufe aufweisenden Windgetriebe (18) und an einer zu einem Windrotor (16) weisenden Axialseite mit einem Getriebegehäuse des Windgetriebes (18) befestigten Getriebeglocke (26) nach einem der Ansprüche 1 bis 13, wobei die Anzahl der Aussparungen (34) der Getriebeglocke (26) durch die Anzahl der Planetenräder mindestens einer als Planetengetriebe ausgestalteten Getriebestufe teilbar ist, wobei vorzugsweise die Anzahl der Aussparungen (34) durch die Anzahl der Planetenräder sämtlicher als Planetengetriebe ausgestalteten Getriebestufe teilbar ist.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Getriebeglocke (26) nach einem der Ansprüche 1 bis 13 oder der Getriebeanordnung nach Anspruch 14 vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile der Getriebeglocke (26) oder der Getriebeanordnung, insbesondere durch 3D-Druck, durchzuführen
und/oder
bei einer Verarbeitung durch eine Datenverarbeitungseinrichtung zur Durchführung einer technischen Simulation eine Simulation der Funktionsweise der Getriebeglocke (26) oder der Getriebeanordnung durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen.
